# FASCICULE DE BREVET EUROPEEN

(11) **EP 1 981 700 B1**
(45) Date de publication et mention de la délivrance du brevet: **11.04.2012**
(21) Numéro de dépôt: 07702951.0
(22) Date de dépôt: 23.01.2007
(51) Int. Cl.: B29B 15/12, B29C 70/32

(54) **PROCEDE DE FABRICATION D'UN ANNEAU COMPOSITE**
VERFAHREN ZUR HERSTELLUNG EINES VERBUNDSTOFFRINGS
PROCESS FOR MANUFACTURING A COMPOSITE RING

(30) Priorité: 27.01.2006 FR 0600892
(43) Date de publication de la demande: 22.10.2008
(73) Titulaire: Michelin Recherche et Technique S.A., 1763 Granges-Paccot (CH)
(72) Inventeur: MERALDI, Jean-Paul, CH-8049 Zurich (CH); DELFINO, Antonio, CH-1772 Grolley (CH)
(74) Mandataire: Ribière, Joel
(86) Numéro de dépôt international: PCT/EP2007/000541
(87) Numéro de publication internationale: WO 2007/085414

(56) Documents cités:
- EP-A- 1 167 080
- EP-A- 1 174 250
- FR-A- 2 787 388
- FR-A- 2 875 437
- JP-A- 52 117 966
- US-A- 4 445 957
- US-A- 5 779 838
- US-A1- 2002 003 004
- US-B1- 6 436 215

## Description

La présente invention est relative aux matériaux composites à base de fibres et de résine durcissable, aux pièces composites fabriquées à partir de tels matériaux ainsi qu'aux procédés et dispositifs de fabrication de tels matériaux ou pièces composites.

La demande de brevet EP-A-1 074 369 (ou brevet US-B1-6 875 297) a décrit un procédé de fabrication d'une pièce composite d'épaisseur donnée, de forme convexe, comprenant des fibres de renforcement parallèles à au moins une direction de renforcement privilégiée, lesdites fibres étant noyées dans une matrice à base d'une composition comprenant une résine durcissable par un rayonnement ionisant, le procédé comportant les étapes suivantes :
- disposer lesdites fibres de renforcement sensiblement parallèlement à un plan et les imprégner de ladite composition à l'état liquide ;
- exposer la composition contenant lesdites fibres, en couche d'épaisseur inférieure à ladite épaisseur donnée, à un rayonnement ionisant, pour polymériser partiellement la résine et obtenir un précomposite dans lequel ladite composition est en phase solide ;
- prélever des tronçons élémentaires dans le précomposite solide ainsi obtenu et les appliquer sur un support, dont la surface est de forme non plane, en les empilant les uns sur les autres en un nombre dicté par ladite épaisseur donnée, et en leur faisant épouser intimement ladite forme du support et ainsi créer un empilage de tronçons élémentaires contraints ;
- soumettre enfin l'empilage ainsi obtenu à un moulage final, sous pression et température élevées, afin de poursuivre la polymérisation de la résine et solidariser ainsi les différents tronçons de précomposite.

Grâce au procédé décrit, il est possible d'obtenir des pièces composites utilisables notamment pour la fabrication de bandages non pneumatiques pour véhicule automobile.

Un inconvénient toutefois de ce procédé est qu'il nécessite, après solidification de la matrice à base de résine, d'abord de sectionner le précomposite solide en tronçons élémentaires, ensuite de superposer, à la forme finale désirée, les tronçons élémentaires contraints, autant de manipulations successives qui sont pénalisantes du point de vue industriel et antinomiques de la recherche de cadences de fabrication élevées.

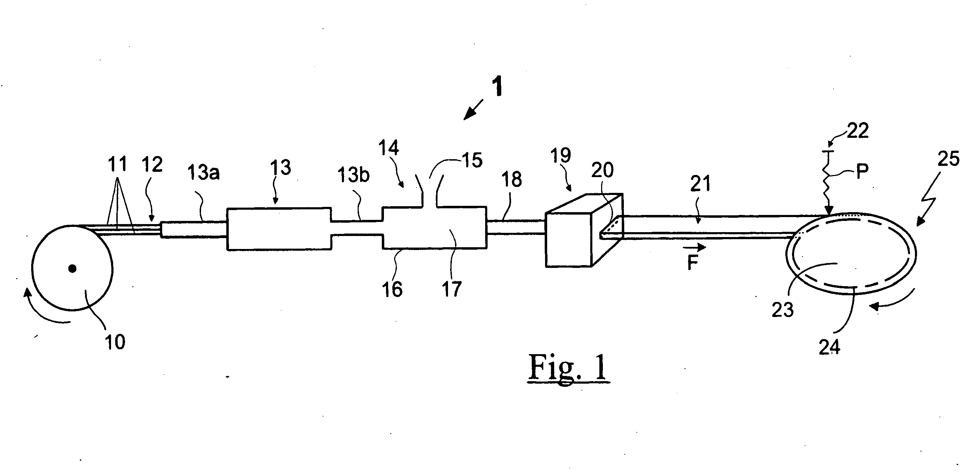

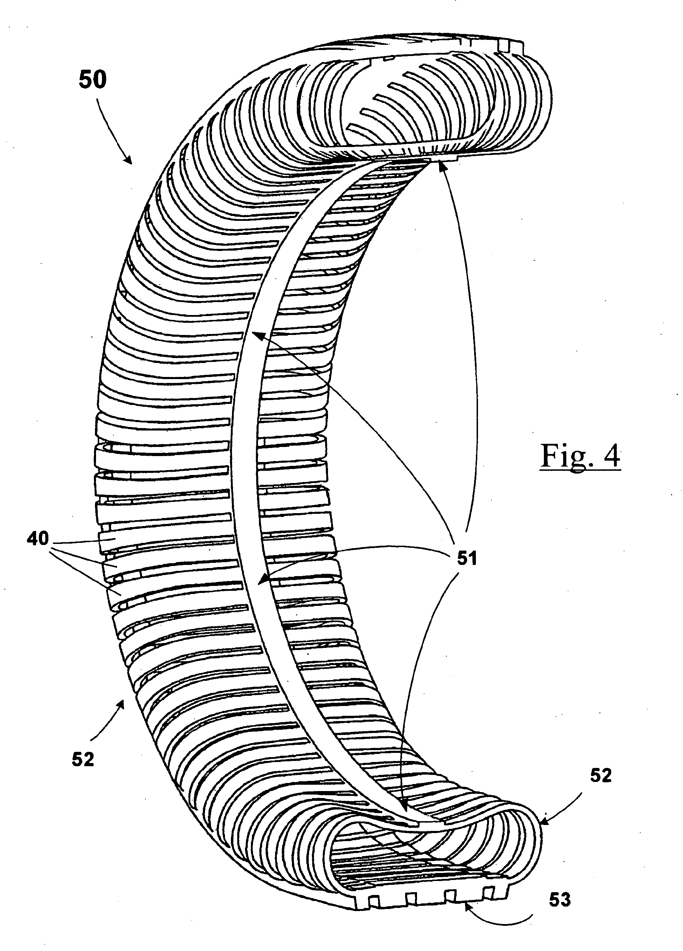

La demande de brevet EP-A-1 174 250 (ou brevet US-B2-6 926 853) a proposé :
- de dégazer l'arrangement de fibres avant de l'imprégner ;
- après dégazage puis imprégnation sous vide, de faire passer l'imprégné liquide au travers d'une filière calibrée, ayant une section de surface et de forme prédéfinies, pour imposer une forme prédéterminée audit imprégné telle que par exemple celle d'un fil de section ronde (voir par exemple Fig. 1 à 3) ou plus particulièrement une forme en ruban (Fig. 4 à 7) ;
- puis, en aval de la filière, de stabiliser ledit fil ou ruban par une solidification substantielle de la résine dans une chambre dite de stabilisation comportant une série de tubes d'irradiation (référencés par exemple respectivement 131 et 231 aux Fig. 1 et 4) émettant dans le spectre UV-visible ;
- enfin d'enrouler ledit fil ou ruban solide (stabilisé) sur une bobine de réception de grand diamètre (référencée par exemple 141 à la Fig. 1), pour stockage intermédiaire.

On peut ensuite préparer des pièces composites par dévidage puis ré-enroulement en couches solides dudit fil ou ruban, sur tout support de forme appropriée.

Toutefois, si les précédents inconvénients de tronçonnage et d'assemblage de tronçons précontraints sont ainsi supprimés, il reste toujours *in fine* une opération de cuisson dans un moule sous très forte pression, sans quoi il est impossible de solidariser lesdits tronçons élémentaires et d'obtenir par conséquent des pièces composites présentant une endurance élevée, en particulier une haute résistance au cisaillement illustrée notamment par des valeurs très élevées de "ILSS" (*Inter Laminar Shear Strength*)*.*

Or, l'opération de cuisson en moule sous forte pression présente de manière connue ses propres inconvénients parmi lesquels un coût élevé des moules, la nécessité de contrôle de l'étanchéité, d'une répartition homogène des pressions, qui sont responsables d'un coût industriel final élevé. A titre d'exemple, pour avoir une pression uniforme de cuisson sous des pressions très élevées de l'ordre de 50 bars, il est nécessaire d'utiliser des membranes souples de cuisson dont la durée de vie s'avère limitée.

Poursuivant ses recherches, la Demanderesse a trouvé un procédé nouveau qui permet de préparer une pièce composite de très haute qualité, sous forme d'un anneau continu, tout en palliant les inconvénients majeurs précités, c'est-à-dire en supprimant d'une part les opérations de tronçonnage puis réassemblage par superposition, en évitant d'autre part la cuisson en moule sous forte pression.

En conséquence, la présente invention a pour objet un procédé de fabrication d'un bloc composite de géométrie fermée ayant la forme d'un anneau continu, à base de fibres et d'une résine réticulable, par enroulement en continu et superposition en plusieurs couches d'un ruban de fibres de renforcement noyées dans une matrice à base d'une composition comportant une résine réticulable, ledit procédé comportant, d'amont en aval, les étapes telles que décrites dans la revendication 1.

Un avantage majeur du procédé de l'invention est qu'il permet la suppression pure et simple de la chambre de stabilisation et de sa série de tubes d'irradiation UV comme décrit dans la demande EPA-1 174 250 ci-dessus, ce qui simplifie de manière notable les procédé et dispositif de fabrication, réduisant du même coup sensiblement le coût industriel final des blocs composites visés.

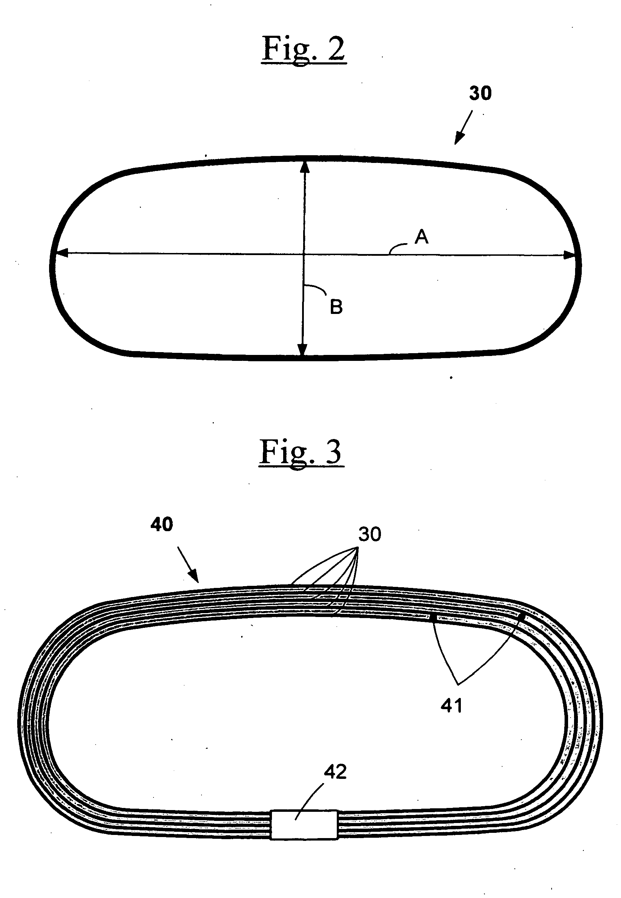

Un dispositif ne faisant par partie de la présente invention mais apte à la mise en oeuvre du procédé conforme à l'invention est également décrit. Un tel dispositif comporte au moins d'amont en aval (en référence aux figures 1 et 2) :
■ des moyens d'arrangement rectiligne (10) des fibres de renforcement (11) et d'entraînement (23) dudit arrangement (12) dans une direction d'avancement (F) ;
■ une chambre à vide (13, 13a, 13b) ;
■ en sortie de la chambre à vide, une chambre d'imprégnation (14, 15, 16, 17, 18) destinée à imprégner les fibres (11, 12) par la composition de résine à l'état liquide (17) ;
■ des moyens de calibrage (19, 20) comportant au moins une filière de calibrage (20), pour formation d'un ruban (21) comportant les fibres (11) et la résine (17) à l'état liquide ;
■ un support ou mandrin (23) de forme fermée destiné à recevoir ledit ruban (21) pour formation, par superposition de couches dudit ruban, d'un anneau composite (30) sur ledit support ;
■ support ou mandrin au regard duquel sont disposés des moyens de polymérisation (25) aptes à polymériser, au moins partiellement, la résine dudit anneau composite sur ledit support ou mandrin (23) une fois l'anneau (30) formé.

Un anneau composite continu, de structure monolithique, comportant des fibres de renforcement unidirectionnelles noyées dans une matrice à base d'une résine réticulable, susceptible d'être obtenu selon le procédé de l'invention, mais ne faisant pas partie de l'invention est également décrit.

L'invention ainsi que ses autres avantages seront aisément compris à la lumière de la description détaillée et des exemples de réalisation qui suivent, ainsi que des figures relatives à ces exemples qui schématisent un dispositif utilisable pour la mise en oeuvre du procédé de l'invention (Fig. 1), un bloc composite (anneau élémentaire continu) susceptible d'être obtenu selon le procédé de l'invention (Fig. 2), ainsi qu'un exemple d'un assemblage de plusieurs blocs composites (Fig. 3) pouvant constituer une structure de renforcement pour un bandage élastique non pneumatique (Fig. 4).

### 1. DESCRIPTION DETAILLEE DE L'INVENTION

Dans la présente description, sauf indication expresse différente, tous les pourcentages (%) indiqués sont des % en masse.

Les trois premières étapes (arrangement, dégazage et imprégnation) du procédé de l'invention sont des étapes connues de l'homme du métier, ainsi que les matières (fibres et compositions de résine) utilisées ; elles ont par exemple été décrites dans l'une et/ou l'autre des deux demandes EP-A-1 074 369 et EP-A-1 174 250 précitées.

Tout type de fibre de renforcement est utilisable dès lors que cette dernière est compatible avec sa matrice de résine réticulable. Une telle fibre est par exemple choisie dans le groupe constitué par les fibres polyacrylique, polyacrylonitrile, alcool polyvinylique, polyamide aromatique (ou "aramide"), polyamide-imide, polyimide, les chlorofibres, les fibres polyester, polyester aromatique, polyéthylène, polypropylène, les fibres de cellulose, rayonne, viscose, polyphénylène benzobisoxazole (ou "PBO"), polyéthylène naphténate ("PEN"), les fibres de verre, de carbone, de silice, les fibres céramiques, et les mélanges de telle fibres. On préfère utiliser des fibres à haute ténacité, particulièrement des fibres choisies dans le groupe constitué par les fibres de verre, les fibres de carbone et les mélanges de telles fibres.

Avant toute imprégnation des fibres, doit être conduite une étape essentielle de dégazage de l'arrangement de fibres par l'action du vide, afin notamment de renforcer l'efficacité de l'imprégnation et surtout de garantir l'absence de bulles à l'intérieur de l'anneau composite final. Une telle étape de dégazage a été décrite en détail dans la demande EP-A-1 174 250 précitée.

La composition de résine employée est par exemple une résine réticulable (i.e., durcissable) par un rayonnement ionisant, tel que par exemple un rayonnement ultraviolet visible émettant de préférence dans le spectre allant au moins de 300 nm à 450 nm, un faisceau d'électrons accélérés ou de rayons X. On peut choisir aussi une composition comprenant une résine durcissable par un peroxyde, la réticulation ultérieure pouvant alors être effectuée, le moment venu, au moyen d'un apport de calories, par exemple par l'action de micro-ondes. De préférence, on utilise une composition du type durcissable par un rayonnement ionisant, la polymérisation finale pouvant être déclenchée et contrôlée aisément au moyen d'un traitement ionisant, par exemple de type UV ou UV-visible.

A titre de résine réticulable, on utilise de préférence une résine polyester ou vinylester. Par résine "polyester", on entend de manière connue une résine du type polyester insaturé. Les résines vinylester sont quant à elles bien connues dans le domaine des matériaux composites.

Sans que cette définition soit limitative, la résine vinylester est préférentiellement du type époxyvinylester. On utilise plus préférentiellement une résine vinylester, notamment du type époxyde, qui au moins pour partie est à base (c'est-à-dire greffée sur une structure du type) novolaque (encore appelée phénoplaste) et/ou bisphénolique, soit préférentiellement une résine vinylester à base novolaque, bisphénolique, ou novolaque et bisphénolique.

Une résine époxyvinylester à base novolaque (partie entre crochets dans la formule I ci-dessous) répond par exemple, de manière connue, à la formule (I) qui suit :

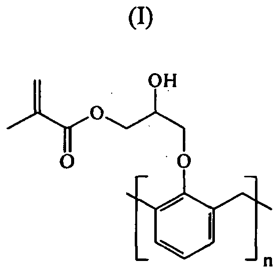

Une résine époxyvinylester à base bisphénolique A (partie entre crochets de la formule (II) ci-dessous) répond par exemple à la formule (le "A" rappelant que le produit est fabriqué à l'aide d'acétone):

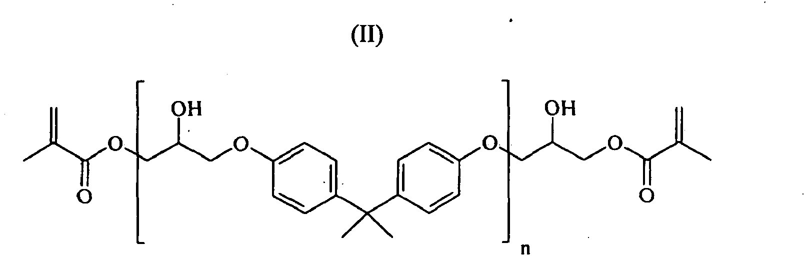

Une résine époxyvinylester de type novolaque et bisphénolique a montré d'excellents résultats. A titre d'exemple d'une telle résine, on peut citer notamment la résine vinylester "ATLAC 590" de la société DSM (diluée avec environ 40% de styrène) décrite dans les demandes EP-A-1 074 369 et EP-A-1 174 250 précitées. De telles résines époxyvinylester sont disponibles chez d'autres fabricants tels que Reichhold, Cray Valley, UCB.

La filière dite "de calibrage" permet, grâce à une section droite de dimensions déterminées, généralement et de préférence rectangulaire, d'ajuster la proportion de résine par rapport aux fibres de renforcement tout en imposant à l'imprégné la forme et l'épaisseur visées pour le ruban.

Le ruban de fibres ainsi formé à travers la filière de calibrage arrive ensuite, en continu, sur un support ou mandrin de forme adaptée sur lequel il est alors enroulé directement, unidirectionnellement, par superposition du nombre Nc prédéterminé de couches. On forme ainsi un anneau continu et fermé dont la section droite est essentiellement rectangulaire, ceci étant réalisé rappelons-le avant toute stabilisation, polymérisation même partielle de la résine.

Selon l'invention, la contrainte de tension subie par les fibres de renforcement, dans le ruban en cours de défilement (c'est-à-dire par les fibres imprégnées), est comprise entre 0,2 et 5 cN/tex (centinewton par tex) ; il s'agit donc de la tension mesurée entre la filière de calibrage et l'entrée du support ou mandrin dictant la forme du bloc composite final. On a constaté qu'en dehors de ce domaine de tension préférentiel, il existait un risque de déformation ou tout au moins de perte de régularité de forme du ruban, pouvant être nuisible à la qualité et endurance du bloc composite final. Pour cette raison, ladite contrainte de tension est plus préférentiellement comprise entre 0,5 et 2,5 cN/tex.

L'opération d'enroulement du ruban sur ledit mandrin se fait de préférence par rotation du mandrin lui-même dans un plan fixe et tangentiel au plan d'arrivée du ruban sur le mandrin tournant. On stoppe l'opération d'enroulement une fois les Nc couches de ruban enroulées sur elles-mêmes.

Selon une variante de réalisation possible, chaque couche d'ordre N peut être pressée mécaniquement à l'entrée du support ou mandrin, par exemple par rouletage à l'aide d'une roulette de même largeur que le ruban, de manière à compacter légèrement l'ensemble, garantir une excellente adhésion entre les couches successives, répartir les fibres de manière homogène latéralement.

Un avantage notable du procédé de l'invention, grâce à l'absence de solidification, même partielle, de la résine pendant toute l'opération d'enroulement est que le ruban garde un pouvoir collant satisfaisant pour permettre l'adhésion, sur la couche d'ordre N, de la couche suivante (N+1) sans qu'il soit nécessaire d'exercer une quelconque action mécanique et/ou thermique supplémentaire.

A ce stade est obtenu un bloc composite se présentant sous la forme d'un anneau plat continu, monolithique au sens qu'aucune couche ou strate élémentaire n'est visible en coupe transversale, dont les fibres de renforcement sont sensiblement unidirectionnelles, réparties de manière homogène dans tout le volume et dans une matrice (i.e., composition de résine) qui est encore à l'état liquide.

La géométrie particulière de l'anneau ainsi formé, de préférence convexe (par exemple circulaire, ovale, elliptique), est bien sûr dictée par celle du support ou mandrin sur lequel le ruban "liquide" a été enroulé. Selon une variante de réalisation préférentielle, le support ou mandrin, par exemple en métal, est pourvu d'une gorge de réception à fond plat épousant la forme du ruban, de profondeur appropriée pour recevoir et stabiliser géométriquement les Nc couches de ruban superposées.

Une fois l'anneau composite "liquide" ainsi formé, on soumet la résine liquide à une polymérisation au moins partielle, par exemple à l'aide d'UV ou d'un traitement thermique, pour stabiliser, solidifier au moins en partie ledit anneau avant de le séparer de son support. Pour faciliter cette séparation, ledit support est avantageusement construit en deux parties amovibles, symétriques ou non, qui peuvent être aisément séparées mécaniquement.

Le bloc composite ainsi stabilisé, dans lequel la composition de résine est alors, au moins pour partie, en phase solide, peut alors être aisément manipulé, stocké tel quel ou traité immédiatement afin de finir de polymériser la résine (cuisson ou réticulation finale).

L'opération de cuisson finale peut être réalisée sous simple pression atmosphérique, "hors moule" (ou "moule ouvert" selon une terminologie reconnue), par tout moyen connu de l'homme du métier. On utilise par exemple un simple four thermique à la température appropriée, sous pression atmosphérique ou sous faible pression, ou encore une enceinte UV. Une variante de réalisation possible consiste à cuire totalement le bloc composite sur son support ou mandrin de réception, et à n'extraire ce dernier qu'après une cuisson complète.

L'épaisseur de l'anneau composite final est de préférence comprise entre 0,5 et 5,0 mm (millimètres), plus préférentiellement comprise dans un domaine de 1 à 2 mm. Sa largeur est de préférence inférieure à 25 mm, plus préférentiellement comprise dans un domaine de 5 à 20 mm.

Quant aux dimensions de l'anneau lui-même (i.e., sensiblement celle du mandrin ou support ayant servi à sa fabrication), sa plus grande dimension (par exemple son diamètre si l'anneau est de géométrie circulaire) est typiquement de l'ordre de quelques cm (centimètres) à quelques dizaines de cm.

Deux caractéristiques essentielles du procédé de l'invention sont d'une part l'épaisseur maximale du ruban en sortie de filière de calibrage, qui doit être inférieure à 0,5 mm, d'autre part le nombre maximal de couches qui sont enroulées pour formation de l'anneau composite, qui doit être inférieur à 15. Il s'est avéré que si ces deux caractéristiques ne sont pas vérifiées, la forme et la régularité du ruban comme celles du composite final ne sont plus sous contrôle, ce qui entraîne une dégradation rédhibitoire de l'endurance en flexion-compression de l'anneau composite final. Par ailleurs, une épaisseur inférieure à 0,05 mm (soit 50 µm) peut être difficilement compatible avec les contraintes industrielles.

Pour toutes les raisons indiquées ci-dessus, l'épaisseur du ruban en sortie de filière est choisie préférentiellement comprise entre 0,05 et 0,35 mm, plus préférentiellement comprise entre 0,10 et 0,30 mm ; le nombre de couches Nc est quant à lui préférentiellement inférieur à 10, plus préférentiellement compris entre 5 et 10.

L'homme du métier s'attendait à ce que des bulles d'air se forment inévitablement en surface du ruban, à la sortie de la filière de calibrage, en raison de la surpression imposée (fin de zone sous vide), et que ces bulles soient ensuite aisément emprisonnées entre les couches de ruban en raison de la technique d'enroulement ici adoptée, en l'occurrence un enroulement unidirectionnel par superposition de couches (sans trancannage, fibres non croisées), qui plus est en l'absence de tension notable sur les fibres. Un tel effet parasite aurait naturellement nuit à la qualité, à l'apparence du composite final ainsi qu'à son endurance.

De manière inattendue il n'est en rien, à condition de respecter toutes les caractéristiques techniques combinées du procédé de l'invention, en particulier les deux conditions essentielles énoncées ci-dessus relatives à l'épaisseur du ruban élémentaire et au nombre de couches superposées.

Le procédé de l'invention peut être mis en oeuvre à l'aide d'un dispositif (1) comportant au moins, d'amont en aval (en référence aux figures 1 et 2)
■ des moyens d'arrangement rectiligne (10) des fibres de renforcement (11) et d'entraînement (23) dudit arrangement (12) dans une direction d'avancement (F) ;
■ une chambre à vide (13,13a, 13b) ;
■ en sortie de la chambre à vide, une chambre d'imprégnation (14, 15, 16, 18) destinée à imprégner les fibres (11, 12) par la composition de résine à l'état liquide (17) ;
■ des moyens de calibrage (19, 20) comportant au moins une filière de calibrage (20), pour formation d'un ruban (21) comportant les fibres (11) et la résine (17) à l'état liquide ;
■ un support ou mandrin (23) de forme fermée, de préférence convexe, destiné à recevoir ledit ruban (21) pour formation, par superposition de couches dudit ruban, d'un anneau composite (30) sur ledit support ;
■ support ou mandrin au regard duquel sont disposés des moyens de polymérisation (25) aptes à polymériser, au moins partiellement, la résine dudit anneau composite sur ledit support ou mandrin (23) une fois l'anneau (30) formé.

La figure 1 annexée schématise très simplement un exemple d'un tel dispositif 1 (pour une partie en perspective afin d'illustrer la naissance du ruban 21 après passage dans les moyens de calibrage 19, 20).

On y voit une bobine 10 contenant, dans l'exemple illustré, des fibres de verre 11. La bobine est déroulée en continu par entraînement, de manière à réaliser un arrangement rectiligne 12 de ces fibres 11. En général, les fibres de renforcement sont livrées en "rovings", c'est à dire déjà en groupes de fibres enroulées en parallèle sur une bobine (par exemple, on utilise des fibres commercialisées par Owens Corning sous la désignation de fibre "Advantex", de titre égal à 1200 tex (pour rappel, 1 tex = 1 g/1000 m de fibre)). C'est par exemple la traction exercée par la réception tournante 23 qui va permettre l'avancement des fibres en parallèle et du ruban tout le long de l'installation 1.

Cet arrangement 12 traverse ensuite une chambre à vide 13 (reliée à une pompe à vide non représentée), disposée entre une tubulure d'entrée 13a et une tubulure de sortie 13b débouchant sur la chambre d'imprégnation 14, les deux tubulures de préférence à paroi rigide ayant par exemple une section minimale supérieure (typiquement deux fois plus) à la section totale de fibres et une longueur très supérieure (typiquement 50 fois plus) à ladite section minimale.

Comme déjà enseigné par la demande EP-A-1 174 250 précitée, l'utilisation de tubulures à paroi rigide, aussi bien pour l'orifice d'entrée dans la chambre à vide que pour l'orifice de sortie de la chambre à vide et le transfert depuis la chambre à vide jusqu'à la chambre d'imprégnation, s'avère compatible à la fois avec des cadences élevées de passage des fibres au travers des orifices sans rompre les fibres, mais aussi permet d'assurer une étanchéité suffisante. Il suffit, au besoin expérimentalement, de rechercher la plus grande section de passage, compte tenu de la section totale des fibres à traiter, permettant encore d'offrir une étanchéité suffisante, compte tenu de la vitesse d'avancement des fibres et de la longueur des tubulures. Typiquement, le vide à l'intérieur de la chambre 13 est par exemple de l'ordre de 0,1 bar.

En sortie de la chambre à vide 13, l'arrangement 12 de fibres 11 traverse une chambre d'imprégnation 14 comportant un réservoir d'alimentation 15 (relié à une pompe doseuse non représentée) et un réservoir d'imprégnation 16 étanche totalement rempli de composition d'imprégnation 17 à base d'une résine durcissable du type vinylester (e.g., "ATLAC 590" de DSM). A titre d'exemple, la composition comporte en outre (à un taux pondéral de 1 à 2%) un agent photo-initiateur approprié pour le rayonnement UV et/ou UV-visible par lequel la composition sera ultérieurement traitée, par exemple l'oxyde de bis(2,4,6-triméthylbenzoyl)-phénylphosphine ("Irgacure 819" de la société Ciba). Bien entendu, la composition d'imprégnation 17 est à l'état liquide. Ainsi, ressort de la chambre d'imprégnation 14, dans une tubulure de sortie 18 étanche (toujours sous vide), un imprégné qui comporte par exemple (% en poids) de 50 à 75% de fibres solides 11, le reste étant constitué par la matrice liquide d'imprégnation 17.

L'imprégné passe ensuite à travers des moyens de calibrage 19 comportant au moins une filière de calibrage 20 dont le canal (non représenté ici), par exemple de forme rectangulaire ou conique, est adapté aux conditions particulières de réalisation. A titre d'exemple, ce canal a une section droite minimale de forme rectangulaire dont l'orifice aval a des dimensions (par exemple 5,3 mm par 0,25 mm ou 10,6 mm par 0,25 mm) légèrement supérieures à celle du ruban visé. Ladite filière a une longueur qui est typiquement supérieure d'au moins 100 fois à la dimension minimale de la section minimale. Elle a pour fonction d'assurer une grande précision dimensionnelle au produit fini, elle peut également jouer un rôle de dosage du taux de fibre par rapport à la résine. Selon une variante de réalisation possible, la filière 20 peut être directement intégrée à la chambre d'imprégnation 14, ce qui évite par exemple l'emploi de la tubulure de sortie 18.

Grâce aux moyens de calibrage (19, 20) est obtenu à ce stade un ruban composite "liquide" 21 (liquide au sens que sa résine d'imprégnation est toujours liquide) dont la forme de la section droite est essentiellement rectangulaire (par exemple 5 mm par 0,2 mm ou 10 mm par 0,2 mm, respectivement).

Entre les moyens de calibrage (19, 20) et le support de réception finale (23), on préfère maintenir les tensions subies par les fibres à un niveau modéré, compris par exemple entre 0,5 et 2,5 cN/tex ; pour contrôler cela, on pourra par exemple mesurer ces tensions directement en sortie de filière, à l'aide de tensiomètres appropriés bien connus de l'homme du métier.

Le ruban 21, entraîné dans le sens de la flèche F, arrive ensuite sur son support de réception finale 23, par exemple un mandrin tournant de forme convexe (ici ovale, à titre d'exemple), à l'entrée duquel il peut être, selon un mode de réalisation avantageux, pressé mécaniquement à l'aide des moyens 22 (par exemple par rouletage mécanique à l'aide d'une roulette) exerçant une légère pression P sur la face supérieure du ruban 21. Le mandrin tournant 23 est de préférence pourvu d'une gorge de réception 24 épousant la forme et largeur du ruban 21 et facilitant ainsi l'enroulement du ruban sur lui-même en ses différentes couches Nc superposées.

Une fois les Nc couches de ruban enroulées, on stoppe l'enroulement. Le bloc composite "liquide" ainsi obtenu est polymérisé partiellement grâce aux moyens de polymérisation 25 disposés au regard du mandrin 23 (par exemple quelques secondes sous rayonnement UV), directement sur ledit mandrin, avant d'extraire ce dernier mécaniquement (séparation en deux parties).

Le ruban ainsi stabilisé peut être manipulé aisément, il est par exemple traité 5 min dans un four UV (lampe "UVAprint" de la société Dr. Hönle, de longueur d'onde 200 à 600 nm) avant cuisson finale dans un simple four par exemple sous pression atmosphérique et haute température (par exemple à 230°C pendant 5 à 6 min) si l'on souhaite une haute valeur de Tg (température de transition vitreuse) sur le composite final. Selon une autre variante de réalisation, toute l'opération de cuisson pourrait être réalisée sous rayonnement UV, entièrement ou non sur le mandrin de réception.

On obtient finalement un bloc composite sous forme d'un anneau continu fermé dont les fibres de renforcement sont réparties de manière homogène dans tout le volume.

Comparativement aux blocs ou anneaux composites de l'art antérieur préparés selon l'enseignement des demandes de brevet EP-A-1 074 369 ou EP-A-1 174 250 précitées, cet anneau composite est nouveau en ce sens qu'il possède une véritable structure monolithique ; on entend par là une structure homogène, c'est-à-dire dans laquelle aucune strate (ou couche élémentaire de ruban) n'est visible en coupe transversale en particulier si on observe ladite coupe sous microscope optique, ni ne peut être révélée à l'usage. Il est doté d'excellentes propriétés mécaniques, avec en particulier une très haute endurance en flexion et en cisaillement, au moins aussi bonne que, sinon supérieure à celle observée sur ces anneaux composites de l'art antérieur exigeant une très haute pression lors de leur cuisson finale.

Un tel exemple de bloc composite 30 a été reproduit schématiquement à la figure 2 annexée, il a été obtenu par enroulement sur un mandrin convexe de forme elliptique. Il consiste en un anneau continu plat 30 fermé dont la section droite rectangulaire a pour dimensions 10 mm par 1,4 mm. Comme on le voit à la figure 2, la forme ou géométrie de l'anneau est essentiellement elliptique avec des dimensions intérieures longitudinale (notée A à la fig. 2) de l'ordre de 15 cm et transversale (notée B à la fig. 2) de l'ordre de 6 cm. Un tel anneau ou bloc composite a été préparé par enroulement de 7 (Nc = 7) couches successives de ruban, conformément au procédé de l'invention précédemment décrit, à l'aide d'un dispositif tel que schématisé à la figure 1.

L'invention offre ainsi la possibilité de fabriquer un bloc composite en très petites sections qui peut avoir de très nombreuses applications industrielles, qu'il soit utilisé individuellement ou associé avec d'autres blocs composites pour formation de structures plus complexes. De telles structures pourront servir notamment d'armature de renforcement à tout système de liaison au sol de véhicules automobiles, tels que bandage non pneumatique, bandage pneumatique, appui interne de sécurité pour pneumatique, roue, autre élément de suspension et anti-vibratoire.

A titre d'exemple, en adaptant le nombre "Na" (Na préférentiellement inférieur à 10, par exemple compris dans un domaine de 3 à 7) et les dimensions de ces anneaux élémentaires, ces derniers peuvent être avantageusement emboîtés les uns dans les autres, puis agrafés mécaniquement ou "chimiquement" grâce par exemple à l'emploi d'un polymère de remplissage destiné à combler tous les interstices présents entre les anneaux élémentaires. Ce polymère de remplissage devra bien entendu être compatible avec la résine de l'anneau composite et capable d'une bonne adhésion avec cette dernière, si besoin aux moyens d'une composition adhésive appropriée telle que décrite par exemple dans la demande WO 2004/058909 (ou US2006/0047050). Ce polymère est par exemple un élastomère diénique ou un polyuréthane.

On a schématisé à la figure 3 un exemple d'une telle armature de renforcement composite 40 formée de 5 (Na = 5) anneaux élémentaires 30 qui sont solidarisés "chimiquement" grâce à l'emploi d'un polymère de remplissage 41 (par exemple en polyuréthane ou en caoutchouc diénique) comblant les interstices présents entre les 5 anneaux élémentaires 30. L'armature 40 peut comporter des moyens de liaison mécaniques 42 (par exemple une agrafe) destinés à assurer la liaison ultérieure à la partie rigide d'une roue comme expliqué ci-après.

Cette armature de renforcement composite peut former un arceau de renforcement radial d'une carcasse de bandage non pneumatique tel que décrit par exemple dans les brevets ou demandes de brevet WO 00/37269 (ou US-B1-6 640 859) et EP 1 359 028 (ou US-82-6 994 135).

La figure 4 annexée montre une perspective partielle d'un tel bandage flexible non pneumatique 50. Un tel bandage, lorsqu'il est associé à tout autre élément mécanique rigide destiné à assurer la liaison entre le bandage flexible et le moyeu, remplace l'ensemble constitué par la pneumatique et la roue tels qu'on les connaît sur la plupart des véhicules routiers actuels.

Le profil du bandage délimite une cavité interne torique de section ovoïdale. Le bandage 50 comporte une zone de fixation 51 (comportant les moyens de liaison 42 illustrés à la figure 3), deux flancs 52 et une bande de roulement 53. La zone de fixation est destinée à être rigidement liée à un moyeu de roue par l'intermédiaire d'un élément mécanique comme un disque ou voile de roue (non représenté ici). Sur cette figure 4, la bande de roulement 53 comporte plusieurs nervures circonférentielles, mais cet aspect n'a bien entendu aucun caractère limitatif. Les flancs 52 sont arrondis et occupent la majeure partie de la hauteur radiale du bandage 50. La structure portante comporte une pluralité d'éléments de support constitués par les armatures de renforcement composites 40 illustrés à la figure 3 précédente.

Les éléments de support 40 sont adjacents circonférentiellement et s'étendent chacun sensiblement radialement vers l'extérieur à partir de la zone de fixation 51. La figure 4 montre également un principe de ce type de bandage non pneumatique selon lequel c'est la flexion des éléments de support qui permet de porter la charge. Sur cet exemple particulier, le bandage comporte une centaine d'éléments de support 40. Ce nombre peut bien sûr être très différent en fonction par exemple du type de véhicule et du type d'usage auxquels il est destiné et des caractéristiques des éléments de support. Le nombre d'éléments peut ainsi varier par exemple de 30 à 300. De préférence, une structure d'interconnexion disposée radialement sous la bande de roulement 53, relativement rigide en traction-compression longitudinale, relie circonférentiellement l'ensemble des éléments de support 40.

Pour d'autres détails sur la constitution de ces éléments de support et de la structure d'interconnexion, le lecteur pourra se reporter utilement aux demandes de brevet WO 00/37269 et EP 1 359 028 précitées.

Un tel bandage non pneumatique est susceptible d'équiper tout type de véhicule à moteur, par exemple de type tourisme, deux roues (notamment motos, scooters), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

En conclusion, grâce au procédé de l'invention, il est désormais possible d'obtenir un anneau composite de très haute qualité par simple enroulement unidirectionnel de couches de résine à l'état liquide, ceci au moindre coût, en évitant notamment les inconvénients connus des procédés antérieurs tels que tronçonnage et assemblage de tronçons précontraints, cuisson en moule sous forte pression, emploi de longues chambres de stabilisation avec en série plusieurs tubes d'irradiation.

## Revendications

1. Procédé de fabrication d'un bloc composite de géométrie fermée, sous forme d'un anneau continu (30), à base de fibres et d'une résine réticulable, par enroulement en continu et superposition en plusieurs couches d'un ruban de fibres de renforcement noyées dans une matrice à base d'une composition comportant une résine réticulable, ledit procédé comportant, d'amont en aval, les étapes suivantes :
■ réaliser un arrangement (12) rectiligne de fibres (11) de renforcement, et entraîner cet arrangement dans une direction d'avancement (F) ;
■ dégazer l'arrangement de fibres (12) par l'action du vide (13) ;
■ après dégazage, imprégner sous vide ledit arrangement de fibres (12) par ladite composition de résine à l'état liquide (17) ;
■ faire passer l'imprégné ainsi obtenu au travers d'une filière (20) pour imposer audit imprégné une forme de ruban (21) constitué des fibres de renforcement (11) dans leur matrice de résine liquide (17), l'épaisseur dudit ruban (21) étant inférieure à 0,5 mm ;
■ déposer le ruban (21) sur un support (23) dictant la forme finale du bloc composite, et enrouler ledit ruban (21) sur ledit support (23), unidirectionnellement, par superposition d'un nombre prédéterminé noté "Nc" de couches dudit ruban (21) pour formation directe dudit anneau (30) continu sur ledit support,
et étant **caractérisé en ce que** :
■ le nombre Nc de couches est inférieur à 15 ;
■ l'opération d'enroulement est conduite en l'absence de solidification de la résine ;
■ la contrainte de tension subie par les fibres de renforcement, dans le ruban en cours de défilement, mesurée entre la filière de calibrage et l'entrée du support ou mandrin dictant la forme du bloc composite final, est comprise entre 0,2 et 5 cN/tex ;
■ une fois l'anneau continu ainsi formé, la résine liquide est soumise à une polymérisation au moins partielle pour stabiliser ledit anneau avant de l'extraire de son support.

2. Procédé selon la revendication 1, dans lequel les fibres de renforcement sont choisies dans le groupe constitué par les fibres de verre, les fibres de carbone, et les mélanges de telles fibres.

3. Procédé selon les revendications 1 ou 2, dans lequel la résine de la composition est une résine réticulable par un rayonnement ionisant ou par un peroxyde.

4. Procédé selon l'une quelconque des revendications 1 à 3, la résine étant une résine polyester ou vinylester.

5. Procédé selon la revendication 4, la résine étant une résine vinylester.

6. Procédé selon la revendication 5, la résine vinylester étant une résine époxyvinylester.

7. Procédé selon l'une quelconque des revendications 1 à 6, l'épaisseur du ruban étant comprise entre 0,05 et 0,35 mm.

8. Procédé selon l'une quelconque des revendications 1 à 7, le nombre de couches Nc étant inférieur à 10.

9. Procédé selon la revendication 8, Nc étant compris entre 5 et 10.

10. Procédé selon la revendication 9, l'épaisseur dudit anneau étant comprise dans un domaine de 1 à 2 mm.

11. Procédé selon l'une quelconque des revendications 1 à 10, la largeur dudit anneau étant inférieure à 25 mm.

12. Procédé selon la revendication 11, la largeur dudit anneau étant comprise dans un domaine de 5 à 20 mm.

## Claims

1. Process for manufacturing a composite block of closed geometry, in the form of a continuous ring (30), based on fibres and on a crosslinkable resin, by continuous winding and superposition of several layers of a tape of reinforcement fibres embedded in a matrix based on a composition comprising a crosslinkable resin, said process comprising, from upstream to downstream, the following steps:
■ producing a rectilinear arrangement (12) of reinforcement fibres (11) and conveying this arrangement in a feed direction (F);
■ degassing the arrangement of fibres (12) by the action of a vacuum (13);
■ after degassing, impregnating said arrangement of fibres (12) under vacuum with said resin composition in the liquid state (17);
■ passing the pre-preg thus obtained through a die (20) to make said pre-preg into the form of a tape (21) composed of reinforcement fibres (11) in their liquid resin matrix (17), the thickness of said tape (21) being less than 0.5 mm;
■ depositing the tape (21) onto a support (23) dictating the final shape of the composite block and winding said tape (21) around said support (23), unidirectionally, by superposition of a predetermined number, denoted by "Nc", of layers of said tape (21) in order to directly form said continuous ring (30) on said support,
and being **characterized in that**:
■ the number Nc of layers is less than 15;
■ the winding operation is conducted in the absence of solidification of the resin;
■ the tensile stress experienced by the reinforcement fibres in the tape while running, measured between the sizing die and the inlet of the support or mandrel that dictates the shape of the final composite block, is between 0.2 and 5 cN/tex;
■ once the continuous ring has thus been formed, the liquid resin is subjected to an at least partial polymerization in order to stabilize said ring before removing it from its support.

2. Process according to Claim 1, in which the reinforcement fibres are chosen from the group composed of glass fibres, carbon fibres and mixtures of such fibres.

3. Process according to Claim 1 or 2, in which the resin of the composition is a resin that can be crosslinked by ionizing radiation or by a peroxide.

4. Process according to any one of Claims 1 to 3, the resin being a polyester or vinyl ester resin.

5. Process according to Claim 4, the resin being a vinyl ester resin.

6. Process according to Claim 5, the vinyl ester resin being an epoxy vinyl ester resin.

7. Process according to any one of Claims 1 to 6, the thickness of the tape being between 0.05 and 0.35 mm.

8. Process according to any one of Claims 1 to 7, the number of layers Nc being less than 10.

9. Process according to Claim 8, Nc being between 5 and 10.

10. Process according to Claim 9, the thickness of said ring being in a range of 1 to 2 mm.

11. Process according to any one of Claims 1 to 10, the width of said ring being less than 25 mm.

12. Process according to Claim 11, the width of said ring being in a range of 5 to 20 mm.

## Patentansprüche

1. Verfahren zur Herstellung eines Verbundblocks mit geschlossener Geometrie, in Form eines Endlosrings (30), auf der Basis von Fasern und eines vernetzbaren Harzes, durch fortlaufendes Aufwickeln und Übereinanderlegen in mehreren Schichten eines Bands von Verstärkungsfasern, die in eine Matrix auf der Basis einer ein vernetzbares Harz aufweisenden Zusammensetzung eingebettet sind, wobei das Verfahren von vorne nach hinten die folgenden Schritte aufweist:
• Herstellen einer geradlinigen Anordnung (12) von Verstärkungsfasern (11) und Antrieb dieser Anordnung in eine Vorschubrichtung (F);
• Entgasen der Faseranordnung (12) durch Vakuumwirkung (13);
• nach dem Entgasen, Vakuumimprägnieren der Faseranordnung (12) mit der Harzzusammensetzung im flüssigen Zustand (17);
• Führen des erhaltenen Imprägnats durch ein Düse (20), um dem Imprägnat eine Bandform (21) aufzuzwingen, das aus den Verstärkungsfasern (11) in ihrer Flüssigharzmatrix (17) besteht, wobei die Dicke des Bands (21) unter 0,5 mm liegt;
• Auflegen des Bands (21) auf einen Träger (23), der die endgültige Form des Verbundblocks vorgibt, und Aufwickeln des Bands (21) auf den Träger (23) in einer Richtung durch Übereinanderlegen einer Vorbestimmten Anzahl "Nc" von Schichten des Bands (21) zum direkten Formen des Endlosrings (30) auf dem Träger,
und **dadurch gekennzeichnet ist, dass**:
• die Anzahl Nc von Schichten geringer als 15 ist;
• der Aufwicklungsvorgang in Anwesenheit einer Verfestigung des Harzes durchgeführt wird;
• die von den Verstärkungsfasern im Band nährend des Durchlaufs erfahrene Zugspannung, gemessen zwischen der Kalibrierdüse und dem Eingang des Trägers oder Dorns, der die Form des endgültigen Verbundblocks vorgibt, zwischen 0,2 und 5 cN/tex liegt;
• wenn der Endlosring so geformt ist, das Flüssigharz einer zumindest teilweise Polymerisierung unterzogen wird, um den Ring zu stabilisieren, eher er aus seinem Träger entnommen wird.

2. Verfahren nach Anspruch 1, bei dem die Verstärkungsfasern aus der Gruppe ausgewählt werden, die aus den Glasfasern, den Kohlenstofffasern und den Mischungen solcher Fasern besteht.

3. Verfahren nach den Ansprüchen 1 oder 2, bei dem das Harz der 2zusammensetzung ein durch eine ionisierende Strahlung oder durch ein Peroxid vernetzbares Harz ist.

4. Verfahren nach einem der Ansprüche 1 bis 3, wobei das Harz ein Polyesterharz oder ein Vinylesterharz ist.

5. Verfahren nach Anspruch 4, wobei das Harz ein Vinylesterharz ist.

6. Verfahren nach Anspruch 5, wobei das Vinylesterharz ein Epoxyvinylesterharz ist.

7. Verfahren nach einem der Ansprüche 1 bis 6, wobei die Dicke des Bands zwischen 0,05 und 0,35 mm liegt.

8. Verfahren nach einem der Ansprüche 1 bis 7, wobei die Anzahl von Schichten Nc unter 10 liegt.

9. Verfahren nach Anspruch 8, wobei Nc zwischen 5 und 10 liegt.

10. Verfahren nach Anspruch 9, wobei die Dicke des Rings in einem Bereich von 1 bis 2 mm liegt.

11. Verfahren nach einem der Ansprüche 1 bis 10, wobei die Breite des Rings geringer als 25 mm ist.

12. Verfahren nach Anspruch 11, wobei die Breite des Rings in einem Bereich von 5 bis 20 mm liegt.
